# EUROPÄISCHE PATENTANMELDUNG

(11) **EP 2 008 886 A2**
(43) Veröffentlichungstag der Anmeldung: **31.12.2008**
(21) Anmeldenummer: 08103745.9
(22) Anmeldetag: 28.04.2008
(51) Int. Cl.: B60S 1/04, F16B 21/06

(54) **Befestigungsklammer**

(30) Priorität: 26.06.2007 DE 102007029410
(71) Anmelder: ROBERT BOSCH GMBH, 70442 Stuttgart (DE)
(72) Erfinder: Lipps, Verena, 77833, Ottersweier (DE)

(57) **Zusammenfassung**

Die vorliegende Erfindung betrifft eine Scheibenwischervorrichtung mit einem Wischermotor und mindestens einem Befestigungsfuß (1) zur Befestigung des Wischermotors an einer Fahrzeugkarosserie (2). Der Befestigungsfuß (1) umfasst eine Befestigungsklammer (3), die mindestens zwei elastische Federarme (3a, 3b) aufweist, welche über mindestens einen Verbindungssteg (3c) miteinander verbunden sind, wobei die Federarme (3a, 3b) an ihren freie Enden jeweils mit mindestens einer Querstrebe (4) versehen sind und zur Befestigung des Wischermotors an der Fahrzeugkarosserie (2) derart elastisch verformbar sind, dass die Querstreben (4) in einer ersten Stellung der Federarme (3a, 3b) durch eine in der Fahrzeugkarosserie (2) ausgebildete Montageöffnung (7) steckbar sind und in einer zweiten Stellung der Federarme (3a, 3b) die Fahrzeugkarosserie (2) hintergreifen.

## Beschreibung

Die vorliegende Erfindung betrifft eine Scheibenwischervorrichtung mit einem Wischermotor und mindestens einem Befestigungsfuß zur Befestigung des Wischermotors an einer Fahrzeugkarosserie eines Kraftfahrzeuges.

### Stand der Technik

Scheibenwischervorrichtungen der oben genannten Art sind allgemein bekannt. Zur Befestigung der Wischermotoren an dem Karosserieblech werden häufig Niete eingesetzt. Ein Nachteil an diesen Systemen liegt darin, dass die Wischermotoren nicht wieder demontiert werden können, ohne durch erhebliche Krafteinwirkung die Nietverbindungen wieder aufzubrechen. Ferner sind zur Herstellung dieser Nietverbindungen zusätzliche Teile bei der Montage notwendig, was mit erhöhten Herstellungs- und Materialkosten sowie einem erhöhten Montageaufwand einhergeht.

Um diese Nietverbindungen durch lösbare Verbindungen zu ersetzen, wird im Stand der Technik ein Drehsystemvorgeschlagen, dessen Befestigungselemente durch Haken gebildet, die durch Eindrehen eine lösbare Verbindung zwischen der Fahrzeugkarosserie und dem Wischermotor herstellen. Zur Fixierung des Wischermotors werden häufig mehrere Befestigungspunkte vorgesehen. Sind an dem Wischermotor beispielsweise drei Befestigungspunkte vorgesehen, so hat die vorgeschlagene Art der Befestigung den Nachteil, dass zur Montage zunächst alle drei Befestigungselemente in die Befestigungspunkte eingesetzt und anschließend gleichzeitig eingedreht werden müssen, um eine lösbare Verbindung zwischen Wischermotor und Fahrzeugkarosserie herzustellen. Dies ist zum einen sehr aufwendig, zum anderen muß der Monteur beide Hände einsetzen, um eine gleichzeitige Befestigung der Montageelemente zu ermöglichen.

### Offenbarung der Erfindung

Es ist daher Aufgabe der vorliegenden Erfindung, eine Scheibenwischervorrichtung bereitzustellen, deren Montage möglichst einfach erfolgen kann.

Diese Aufgabe wird erfindungsgemäß dadurch gelöst, dass der Befestigungsfuß eine Befestigungsklammer umfaßt, die mindestens zwei elastische Federarme aufweist, welche über mindestens einen Verbindungssteg miteinander verbunden sind, wobei die Federarme an ihren freien Enden jeweils mit mindestens einer Querstrebe versehen sind und zur Befestigung des Wischermotors an der Fahrzeugkarosserie derart elastisch verformbar sind, dass die Querstreben in einer ersten Stellung der Federarme durch eine in der Fahrzeugkarosserie ausgebildete Montageöffnung steckbar sind und in einer zweiten Stellung der Federarme die Fahrzeugkarosserie hintergreifen.

Mit anderen Worten wird so eine Befestigungsmöglichkeit bereitgestellt, die es ermöglicht die Montage des Wischermotors an dem Karosserieblech der Fahrzeugkarosserie durch Einsetzen einzelner, elastischer Befestigungsklammern zu ermöglichen, was den Vorteil hat, dass die Befestigungsfüße auch nacheinander in die verschiedenen Befestigungspunkte des Wischermotors eingesetzt werden können, so dass eine einfache Montage durch eine einzelne Person mit nur einer Hand durchgeführt werden kann. Auch die geometrische Ausgestaltung eines solchen Befestigungsfußes erweist sich als wesentlich einfacher als die Vorrichtung zur Eindrehung des Wischermotors in das Karosserieblech. Es werden auch keine zusätzlichen Montageteile wie z.B. separate Befestigungsdome oder Schrauben mit Muttern oder Niete benötigt, die ggf. auch verlorengehen könnten. Durch die erfindungsgemäße Vorrichtung wird eine Befestigungsmöglichkeit bereitgestellt, die zum einen lösbar ist und zum anderen einhändig mit wenig Kraft montierbar ist.

Um die Federarme zur Montage des Befestigungsfußes bzw. des Wischermotores in eine Stellung zu bringen, die es erlaubt, die an den Federarmen ausgebildeten Querstreben durch die Fahrzeugkarosserie zu stecken, sind in einem Ausführungsbeispiel Führungsstege an den Federarmen ausgebildet.

Eine besonders einfache Handhabung der Montage wird erreicht, indem die Führungsstege derart an den Federarmen, insbesondere an den Querstreben angeordnet sind, dass durch Verschiebung der Befestigungsklammer in Steckrichtung die Federarme automatisch in die erste Stellung bewegbar sind. Die Federarme und Querstreben können so ausgebildet sein, dass die Befestigung an der Fahrzeugkarosserie durch einfaches Einklipsen der Federarme bzw. Querstreben erfolgt. Ein aktives vom Monteur auszuführendes Zusammendrücken der Federarme ist hier zur Montage der Befestigungsfüße nicht notwendig, so dass Betätigungsmittel für die Montage entfallen können. Es kann jedoch sinnvoll sein, entsprechende Führungsstege zur Vereinfachung der Demontage der Betätigungsfüße von der Fahrzeugkarosserie vorzusehen. Werden die Führungsstege so an den Querstreben bzw. den freien Enden der Federarme angeordnet, dass sie zusammen ein im Scheitelpunkt unterbrochenes V bilden, wird durch die Führung beim Einsetzen des Befestigungsfußes in die Fahrzeugkarosserie neben der Befestigung eine automatische Zentrierung des Befestigungsfußes während des Montagevorgangs in der Befestigungsstelle erreicht.

Eine besonders platzsparende Variante der vorliegenden Erfindung sieht vor, dass die Federarme axial versetzt zueinander an der Befestigungsklammer ausgebildet sind. Dadurch ist es möglich, die Federarme über die Zentrale Achse der Befestigungsklammer hinweg zu verbiegen, so dass es nicht mehr notwendig ist, den Durchmesser der Montageöffnung mindestens so groß zu wählen wie die Summe der Längen der Querstreben. Der Durchmesser der Montageöffnung kann somit fast auf die Hälfte der im üblichen Fall notwendigen Größe reduziert werden, was mit einem wesentlichen sicheren Einklipsen der Befestigungsklammer in die Karosserie verbunden ist, was mit einer wesentlich geringeren Materialschwächung der Karosserie im Bereich des Befestigungsfußes sowie mit einer wesentlich größeren Auflagefläche der Querstreben bzw. eines an der Befestigungsklammer ausgebildeten Anschlages einhergeht.

In einem weiteren Ausführungsbeispiel der vorliegenden Erfindung sind die Federarme jeweils mindestens zweiteilig ausgebildet, wobei im montierten Zustand der eine Teil der Federarme die Fahrzeugkarosserie hintergreift und der andere Teil der Federarme zur Regulierung der Einstecktiefe der Befestigungsklammer an der Fahrzeugkarosserie einen Anschlag bildet. Durch diese Ausbildung der Federarme wird eine Festlegung der Einstecktiefe bei der Montage des Befestigungsfußes sowie eine Stabilisierung der Position der Befestigungsklammer in der Öffnung der Fahrzeugkarosserie erreicht. So wird es möglich, die Lage des Motors an der Karosserie genau zu bestimmen.

Zur Schwingungsentkopplung des Wischermotors von eventuell über die Fahrzeugkarosserie eingeleiteten Schwingungen kann in einem Ausführungsbeispiel ein Dämpfungselement zwischen der Befestigungsklammer und einem Gehäuse des Befestigungsfußes vorgesehen sein.

Ein für die elastische Verformung der Befestigungsklammer besonders geeignetes Material stellen Federstahl und/oder Kunststoff dar. Natürlich kann jedes andere Material eingesetzt werden, welches eine ausreichende elastische Verformbarkeit bei gleichzeitig ausreichender Festigkeit und Stabilität aufweist.

In einem alternativen Ausführungsbeispiel ist mindestens ein Betätigungsmittel, an dem Befestigungsfuß, insbesondere an dem Dämpfungselement vorgesehen, um die Federarme für die Montage des Befestigungsfußes bzw. des Wischermotores an der Fahrzeugkarosserie aus der zweiten Stellung in die erste Stellung zu bewegen.

Um ein ungewolltes Lösen des Wischermotors bzw. der Befestigungsfüße von der Fahrzeugkarosserie zu verhindern, ist in einem Ausführungsbeispiel eine Sicherungskappe auf die Querstreben und/oder die Führungsstege der Befestigungsklammer aufgeschoben. Dadurch wird verhindert, dass die Federarme ungewollt durch äußere Einwirkung zusammengedrückt werden, was im ungünstigsten Falle mit einem Herausrutschen der Befestigungsklammer bzw. des Befestigungsfußes einerseits und einem Lösen des Wischermotors von der Fahrzeugkarosserie andererseits einhergehen würde.

Hinsichtlich weiterer vorteilhafter Ausführungsformen der vorliegenden Erfindung wird auf die Unteransprüche sowie die nachfolgende Beschreibung eines Ausführungsbeispiels anhand der beiliegenden Zeichnung verwiesen.

### Ausführungsbeispiele

Es zeigt:
- Figur 1: eine Schnittdarstellung eines Befestigungsfußes mit einer erfindungsgemäßen Befestigungsklammer;
- Figur 2: eine Schnittdarstellung eines Befestigungsfußes mit einer erfindungsgemäßen Befestigungsklammer mit Führungsstegen;
- Figur 3: einen Befestigungsfuß mit einer Befestigungsklammer mit axial zueinander versetzten Federarmen; und
- Figur 4: eine perspektivische Darstellung einer erfindungsgemäßen Befestigungsklammer mit zweiteilig ausgebildeten Federarmen.

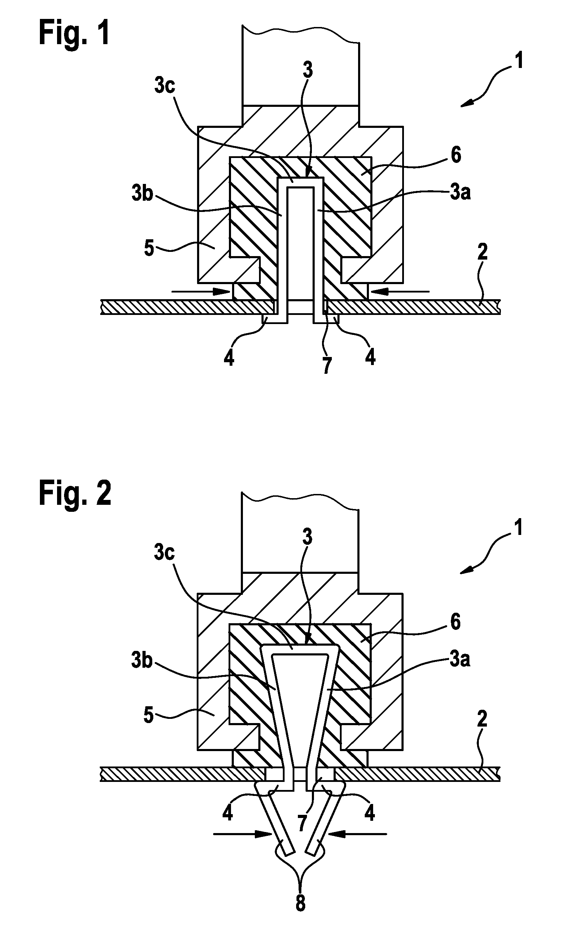

Die Figur 1 zeigt einen Querschnitt durch einen Befestigungsfuß 1 einer Scheibenwischervorrichtung zur Befestigung eines Wischermotors an einer Fahrzeugkarosserie 2.

Der Befestigungsfuß 1 umfaßt eine Befestigungsklammer 3, die zwei elastische Federarme 3a, 3b aufweist. Die beiden elastischen Federarme 3a, 3b sind über einen Verbindungssteg 3c miteinander verbunden. An den freien Enden der Federarme 3a, 3b ist jeweils eine Querstrebe 4 vorgesehen. Die Federarme 3a, 3b sind aus einem Federstahl hergestellt, so dass sie derart elastisch verformbar sind, dass die Querstreben 4 in einer ersten Stellung der Federarme 3a, 3b,in der die Federarme elastisch verformt sind, durch eine in der Fahrzeugkarosserie 2 ausgebildete Montageöffnung 7 steckbar sind und in einer zweiten Stellung der Federarme 3a, 3b in der die Federarme entspannt d.h. nicht mit einer Kraft belastet sind, die Fahrzeugkarosserie 2 hintergreifen.

Der Befestigungsfuß 1 weist ein Gehäuse 5 auf, in das die Befestigungsklammer 3 eingesetzt ist. Um eine Schwingungsübertragung zwischen Karosserie 2 und dem daran befestigten Wischermotor über den Befestigungsfuß 1 zu verhindern, ist zwischen der Befestigungsklammer 3 und dem Gehäuse 5 des Befestigungsfußes 1 ein Entkopplungselement 6 angeordnet. Das Entkopplungselement 6 steht im Öffnungsbereich des Gehäuses 5 des Befestigungsfußes 1 derart aus dem Gehäuse 5 vor, dass zum einen eine direkte Berührung zwischen Befestigungsfuß 1 und Fahrzeugkarosserie 2 unterbunden wird. Zum anderen ist es möglich, die Federarme 3a, 3b über den vorstehenden Teil des Entkopplungselementes 6 derart elastisch zu verformen, dass durch Aufbringen einer Kraft sie aus der zweiten Stellung in die erste Stellung überführbar sind, aus der es dann möglich ist, den Befestigungsfuß 1 von der Fahrzeugkarosserie 2 zu demontieren.

In einem nicht dargestellten Ausführungsbeispiel sind dazu separate Öffnungen in dem Entkopplungselement 6 ausgebildet, in die nicht dargestellte Betätigungsmittel einsetzbar sind, über die eine Einbringung einer Kraft zur elastischen Verformung der Federarme 3a, 3b möglich ist, ohne dazu das Entkopplungselement 6 bewegen zu müssen. Diese Betätigungsmittel können entweder im unteren, freistehenden Bereich des Entkopplungselementes 6 ausgebildet sein oder aber in dem vom Gehäuse 5 umschlossenen Bereich, jedoch müssen dann korrespondierende Öffnungen auch in dem Gehäuse 5 des Befestigungsfußes ausgebildet sein, um eine Bewegung der Federarme 3a, 3b zu ermöglichen.

Die Figur 2 zeigt eine alternative Ausführungsform des Befestigungsfußes 1 gemäß der Figur 1. Gleiche Teile sind mit gleichen Bezugsziffern versehen. In diesem Ausführungsbeispiel sind an den Federarmen 3a, 3b, insbesondere an den Querstreben 4 Führungsstege 8 derart angeordnet, dass durch eine Verschiebung des Befestigungsfußes 1 bzw. der Befestigungsklammer 3 in Steckrichtung, d.h. in Richtung der Montageöffnung in der Fahrzeugkarosserie 2, die Federarme 3a, 3b quasi automatisch in ihre erste Stellung bewegbar sind. Die Führungsstege 8 sind in diesem Ausführungsbeispiel so angeordnet, dass sie zusammen ein im Scheitelpunkt unterbrochenes V bilden, was dazu führt, dass durch die Verschiebung der Befestigungsklammer 3 in Steckrichtung eine automatische Zentrierung des Befestigungsfußes 1 in der Montageöffnung 7 erfolgt. Die Federarme 3a, 3b und die Querstreben 4 sind so ausgebildet, dass die Befestigung des Befestigungsfußes 1 an der Fahrzeugkarosserie 2 durch einfaches Einklipsen der Federarme 3a, 3b bzw. Querstreben 4 erfolgt. Ein aktives vom Monteur auszuführendes Zusammendrücken der Federarme 3a, 3b ist hier zur Montage der Befestigungsfüße 1 nicht notwendig. Somit können Betätigungsmittel für die Montage des Befestigungsfußes 1 bzw. der Befestigungsklammer 3 entfallen. Allerdings kann es sinnvoll sein, entsprechende Betätigungsmittel zur Vereinfachung der Demontage in der Befestigungsfüße 1 vorzusehen.

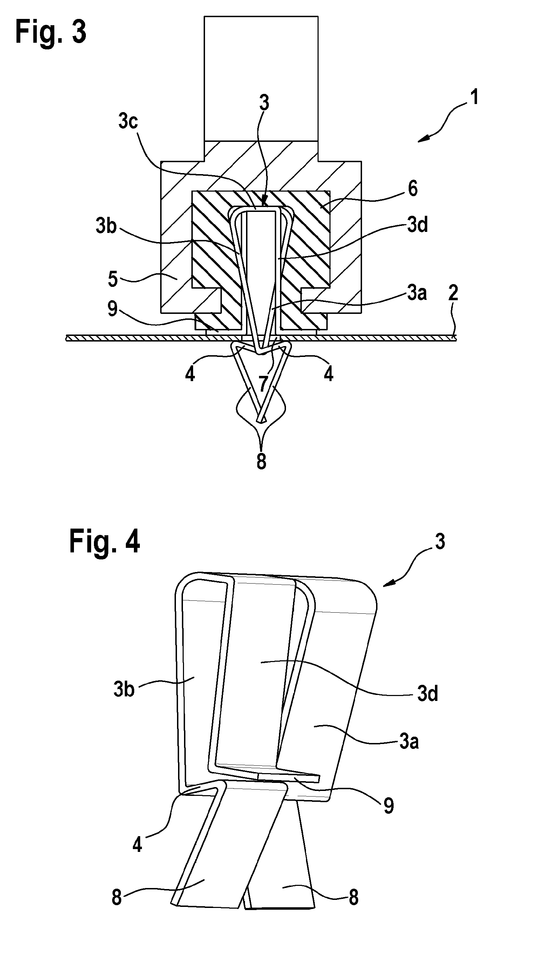

Die Figur 3 zeigt ein weiteres alternatives Ausführungsbeispiel einer Befestigungsklammer 3. Die Befestigungsklammer 3 weist Federarme 3a, 3b auf, die in diesem Ausführungsbeispiel jeweils zweiteilig ausgeführt sind, wobei ein Teil der Federarme 3a, 3b zur Befestigung des Wischermotors die Fahrzeugkarosserie 2 im montierten Zustand hintergreift und der andere Teil 3d zur Positionierung der Befestigungsklammer 3 relativ zu der Fahrzeugkarosserie 2 an der Fahrzeugkarosserie 2 einen Anschlag 9 bildet. Die Befestigungsklammer 3 ist aus einem Federstahl gebildet. Sie kann natürlich aus jedem geeigneten Material gebildet sein, welches die notwendigen Elastizitätseigenschaften aufweist, wie beispielsweise Kunststoffe,.

Wie auch aus Figur 4 gut zu entnehmen ist, sind in diesem Ausführungsbeispiel die Federarme 3a, 3b axial versetzt zueinander an der Befestigungsklammer 3 ausgebildet. Diese Ausführungsvariante erweist sich als besonders platzsparend und effektiv, da aufgrund des "Raumteilerprinzips" die effektive Länge der Querstreben 4 relativ zur Montageöffnung 7 groß gewählt werden kann. In den vorangegangenen Ausführungsbeispielen mußte die Montageöffnung 7 mindestens genau so groß sein wie die Summe der Längen der Querstreben 4. Durch dieses Arrangementprinzip ist es möglich, die Montageöffnung 7 fast auf die Hälfte der im üblichen Fall notwendigen Größe zu reduzieren, was mit einem wesentlich sichereren Einklipsen der Befestigungsklammer 3 in die Fahrzeugkarosserie 2 verbunden ist und einen wesentlich stabileren Zustand in der Umgebung der Montageöffnung 7 im Bereich des Hintergriffs der Querstreben 4 hervorruft. Durch Wahl einer möglichst kleinen Montageöffnung 7 ist auch eine wesentlich höhere Stabilität des Befestigungsfußes 1 an der Fahrzeugkarosserie 2 gegeben. Auch die Materialschwächung der Fahrzeugkarosserie 2 kann so möglichst gering gehalten werden.

Die Federarme 3a, 3b gemäß der Figur 4 sind jeweils zweiteilig ausgebildet, wobei im montierten Zustand der eine Teil der Federarme 3a, 3b die Fahrzeugkarosserie 2 hintergreift und der andere Teil der Federarme 3a, 3b zur Regulierung der Einstecktiefe der Befestigungsklammer 3 an der Fahrzeugkarosserie 2 einen Anschlag 9 bildet. Durch Vorsehen des Anschlags 9 ist gewährleistet, dass die Befestigungsklammer 3 durch ein zu weites Verschieben in Richtung der Montageöffnung 7 nicht beschädigt wird, da durch den Anschlag 9 die Position der Befestigungsklammer 3 innerhalb der Fahrzeugkarosserie 2 genauestens festlegbar ist.

Um zu verhindern, dass die Führungsstege 8 nach der Montage ungewollt durch äußere Einflüsse derart zusammengedrückt werden, dass sie durch die Montageöffnung 7 ungewollt hindurchrutschen können, wodurch sich der Wischermotor zumindest teilweise lösen würde, oder aber die Schwingungsentkopplung durch das Dämpfungselement 6 versagen würde, ist in einem nicht dargestellten Ausführungsbeispiel nach der Montage des Befestigungsfußes 1 an der Fahrzeugkarosserie 2 durch Einklipsen der Befestigungsklammer 3 eine Sicherungskappe aus einem flexiblen, insbesondere gummielastischen Material auf die Querstreben 4 bzw. die Führungsstege 8 derart aufgeschoben, dass sie sowohl die Querstreben 4 als auch die Führungsstege 8 vollständig umschließt und so eine starre Schutzhülle bildet. Eine elastische Verformung der Führungsstege 8 bzw. der Federarme 3 ist somit nur durch Abnahme der Sicherungskappe zur Demontage möglich und ein ungewolltes Lösen der Befestigungsfüße 1 aus ihrer Position effektiv verhindert.

## Patentansprüche

1. Scheibenwischervorrichtung mit einem Wischermotor und mindestens einem Befestigungsfuß (1) zur Befestigung des Wischermotors an einer Fahrzeugkarosserie (2), **dadurch gekennzeichnet, dass** der Befestigungsfuß (1) eine Befestigungsklammer (3) umfasst, die mindestens zwei elastische Federarme (3a, 3b) aufweist, welche über mindestens einen Verbindungssteg (3c) miteinander verbunden sind, wobei die Federarme (3a, 3b) an ihren freie Enden jeweils mit mindestens einer Querstrebe (4) versehen sind und zur Befestigung des Wischermotors an der Fahrzeugkarosserie (2) derart elastisch verformbar sind, dass die Querstreben (4) in einer ersten Stellung der Federarme (3a, 3b) durch eine in der Fahrzeugkarosserie (2) ausgebildete Montageöffnung (7) steckbar sind und in einer zweiten Stellung der Federarme (3a, 3b) die Fahrzeugkarosserie (2) hintergreifen.

2. Scheibenwischervorrichtung nach Anspruch 1, **dadurch gekennzeichnet, dass** zur Bewegung der Federarme (3a, 3b) in die erste Stellung mindestens ein Betätigungsmittel an dem Befestigungsfuß (1) ausgebildet sind.

3. Scheibenwischervorrichtung nach Anspruch 2, **dadurch gekennzeichnet, dass** die Betätigungsmittel durch Führungsstege (8) gebildet sind, die derart an den Federarmen (3a, 3b) insbesondere an den Querstreben (4) angeordnet sind, dass durch Verschiebung der Befestigungsklammer (3) in Steckrichtung die Federarme (3a, 3b) automatisch selbsttätig in die erste Stellung bewegbar sind.

4. Scheibenwischervorrichtung nach Anspruch 3, **dadurch gekennzeichnet, dass** die Führungsstege (8) derart an den Federarmen (3a, 3b), insbesondere an den Querstreben (4), angeordnet sind, dass durch die Verschiebung der Befestigungsklammer (3) in Steckrichtung eine automatische Zentrierung des Befestigungsfusses (1) erfolgt.

5. Scheibenwischervorrichtung nach einem der vorhergehenden Ansprüche, **dadurch gekennzeichnet, dass** die Federarme (3a, 3b) axial versetzt zueinander an der Befestigungsklammer (3) vorgesehen sind.

6. Scheibenwischervorrichtung nach einem der vorhergehenden Ansprüche, **dadurch gekennzeichnet, dass** die Federarme (3a, 3b) jeweils mindestens zweiteilig ausgebildet sind, wobei ein Teil der Federarme (3a, 3b) zur Befestigung des Wischermotors die Fahrzeugkarosserie (2) im montierten Zustand hintergreift und der andere Teil zur Positionierung der Befestigungsklammer (3) an der Fahrzeugkarosserie (2) einen Anschlag (9) bildet.

7. Scheibenwischervorrichtung nach einem der vorherigen Ansprüche, **dadurch gekennzeichnet, dass** zur Schwingungsentkopplung des Wischermotors von der Fahrzeugkarosserie (2) ein Dämpfungselement (6) zwischen der Befestigungsklammer (3) und einem Gehäuse (5) des Befestigungsfusses (1) vorgesehen ist.

8. Scheibenwischervorrichtung nach einem der vorherigen Ansprüche, **dadurch gekennzeichnet, dass** die Befestigungsklammer (3) aus einem Federstahl und/oder aus einem Kunststoff gebildet ist.

9. Scheibenwischervorrichtung nach einem der vorhergehenden Ansprüche, **dadurch gekennzeichnet, dass** zur Verhinderung eines ungewollten Lösens des Befestigungsfußes (1) von der Fahrzeugkarosserie (2) eine Sicherungskappe auf die Querstreben (4) und/oder die Führungsstege (8) der Befestigungsklammer (3) aufschiebbar sind.

10. Befestigungsklammer zum Einsetzen in einem Befestigungsfuß (1) zur Befestigung des Wischermotors an einer Fahrzeugkarosserie (2), **dadurch gekennzeichnet, dass** sie mindestens zwei elastische Federarme (3a, 3b) aufweist, welche über mindestens einen Verbindungssteg (3c) miteinander verbunden sind, wobei die Federarme (3a, 3b) an ihren freien Enden jeweils mit mindestens einer Querstrebe (4) versehen sind und derart elastisch verformbar sind, dass die Querstreben (4) in einer ersten Stellung der Federarme (3a, 3b) durch eine in der Fahrzeugkarosserie (2) ausgebildete Montageöffnung (7) steckbar sind und in einer zweiten Stellung der Federarme (3a, 3b) die Fahrzeugkarosserie (2) hintergreifen, wobei die Federarme (3a, 3b) jeweils mindestens zweiteilig ausgebildet sind und im montierten Zustand der eine Teil der Federarme (3a, 3b) die Fahrzeugkarosserie (2) hintergreift und der andere Teil der Federarme (3a, 3b) zur Regulierung der Einstecktiefe der Befestigungsklammer (3) an der Fahrzeugkarosserie (2) einen Anschlag (9) bildet.
